# EUROPÄISCHE PATENTSCHRIFT

(11) **EP 0 471 319 B1**
(45) Veröffentlichungstag und Bekanntmachung des Hinweises auf die Patenterteilung: **15.03.1995**
(21) Anmeldenummer: 91113493.0
(22) Anmeldetag: 12.08.1991
(51) Int. Cl.: F16L 49/02, F16L 58/10

(54) **Betonrohr**
Concrete pipe
Tuyau de béton

(30) Priorität: 13.08.1990 DE 4025603
(43) Veröffentlichungstag der Anmeldung: 19.02.1992
(60) Teilanmeldung: 94113985.9
(73) Patentinhaber: Forsheda-Stefa GmbH, D-63477 Maintal (DE)
(72) Erfinder: Preisendörfer, Gerhard, W-6056 Heusenstamm (DE)
(74) Vertreter: Linde, Leif

(56) Entgegenhaltungen:
- EP-A- 0 343 677
- EP-A- 0 358 256
- EP-A- 0 426 147
- DE-A- 2 165 068
- DE-A- 2 346 062
- DE-A- 3 029 674
- DE-A- 3 818 064

## Beschreibung

Die Erfindung bezieht sich auf ineinandersteckbare, korrosionsgeschützte Betonrohre mit Glockenmuffenende und Spitzende und auf ein Verfahren zur Herstellung solcher gegossener Betonrohre.

Zementgebundene Abwasserrohre unterliegen der Korrosion. Man ist deshalb seit längerer Zeit dazu übergegangen, solche Abwasserrohre dadurch gegen Korrosion zu schützen, daß man die Rohrbohrung mit einer Kunststoffbeschichtung oder Auskleidung ("Inliner") versieht, was während oder nach dem Gießen der Betonrohre geschieht. Um zu einem wirksamen Schutz von verlegten Abwasserrohren zu gelangen, muß die Verbindung zwischen den Rohren so abgedichtet werden, daß das aggressive Wasser nicht an ungeschützten Beton gelangt. Man hat deshalb die Fingen zwischen Glockenmuffe und Spitzende mit Polyurethan oder anderen geeigneten Stoffen aufgefüllt. Es hat sich aber gezeigt, daß der Spalt zwischen Muffe und Rohrende nicht unverändert bleibt, da Setzungen in gebauten Kanälen unvermeidlich sind. Dadurch kommt es zu Spaltveränderungen und letztlich zu Undichtigkeiten. Indem man die Glockenmuffe mit einer PVC-Auskleidung versieht und das Polyurethan als großflächige Dichtung am Spitzende angießt, vermeidet man zwar den Zutritt aggressiver Wässer zu dem Beton (DE-U-89 00 345), es bleibt aber abzuwarten, ob eine großflächige Dichtung bei Setzbewegungen des Kanals dicht bleibt. Jedenfalls ist der maschinenmäßige Aufwand zur Herstellung der das Spitzende einhüllenden Dichtung beträchtlich.

Bei einem korrosionsgeschützten Betonrohr nach dem Oberbegriff des Anspruchs 1 (DE-A-2 165 068) sind die Innenoberflächen der ineinandergesteckten Betonrohre bis zur Überdeckung mit einer Dichtung ausgekleidet. Die Dichtung selbst ist über einen am Spitzende angebrachten Vorsprung geschoben und muß mit Spannung am Spitzende anliegen, um der Dichtfunktion zu genügen. Dies bedingt aber eine noch größere Zugspannung im Bereich des äußeren radialen Umfangs, was zu Rissen führen kann. Die Rißfestigkeit gegenüber Weiterreißen von unter Zugspannung stehenden Elastomeren ist gering, so daß die Gefahr der Rißausbreitung leicht zu Undichtigkeiten führen kann. Ein weiterer Nachteil ist darin zu erblicken, daß eine auf das Spitzende aufgezogene Dichtung gegen Beschädigungen an der Baustelle ziemlich exponiert ist, sei es durch unsachgemäße Handhabung oder durch Einwirkung der Sonne und des Ozons auf die freiliegenden Dichtungsflächen.

Es ist auch bereits bekannt, die Dichtung in die innere axiale Fläche des Glockenmuffenendes bei der Herstellung der Betonwandung miteinzugießen (EP-A-0 358 256 A2), wobei die Dichtung eine Dichtlippe aufweist, die beim Eingießen durch einen Schutzring gestützt wird, der entfernt wird. Um einen solchen Schutzring zu halten, ist an der Dichtung ein Fortsatz vorgesehen, der im übrigen nach Entfernung des Schutzringes als Anschlag für das Spitzende dienen kann. Beim Gießen des Betonrohrs besteht die Gefahr, daß Zementwasser zwischen Muffenformring und Schutzring gerät, wodurch dieser und der Dichtungsfortsatz aufschwimmen, was zu einer Deformierung der inneren Schulter der Glockenmuffe führen würde. Um dies zu vermeiden, weist der Fortsatz einen Vorsprung an, der sich dichtend an den Glockenmuffenformring anlegt und im übrigen in der inneren radialen Betonwand der Glockenmuffe eingebunden ist. Diese Abdichtung hat nichts mit der Abdichtung der späteren ineinandergesteckten Rohre zu tun, insbesondere ist der Vorsprung wegen seiner Einbindung nicht so angeordnet, daß er sich an eine Innenauskleidung des Betonrohres anschließen könnte.

Der Erfindung liegt die Aufgabe zugrunde, ineinandersteckbare, korrosionsgeschützte Betonrohre zu schaffen, die mit mäßigem Maschinenaufwand hergestellt und einfach verlegt werden können und auch bei Beschickung mit aggressiven Wässern eine lange Lebensdauer erwarten lassen.

Die gestellte Aufgabe wird aufgrund der Merkmalskombination des Anspruchs 1 gelöst. Man nutzt dabei den Umstand aus, daß eine im Glockenmuffenende eingegossene in axialer Richtung als schmal zu bezeichnende Dichtung den Spalt zum benachbarten Rohr gut abdichtet, auch wenn dieses um gewisse axiale Beträge verschoben oder um wenige Winkelgrade geneigt wird. Bei dieser Ausbildung wird gewissermaßen ein Bewegungsspalt zwischen den benachbarten Betonrohren freigelassen, wobei jedoch erfindungsgemäß die Betonwandteile im Bereich dieses Bewegungsspaltes mit korrosionsfestem Material ausgekleidet oder abgedeckt sind.

Dichtungen bestehen normalerweise aus einem Elastomer, der eine gewisse Nachgiebigkeit zeigt, aber empfindlich gegenüber Beschädigungen durch scharfe Körner und dergleichen ist. Während man bei der Montage durch aufgebrachte Gleitmittel und dergleichen eine Beschädigung der Dichtung vermeiden kann, besteht die Beschädigungsgefahr effektiv bei nachträglichen Bewegungen der Rohre infolge Setzens des Bodens, unruhigen Untergrund oder Bergsenkungen. Für solche Fälle spät auftretender Relativverschiebungen der Betonrohre ist vorgesehen, einen Gleitschlauch auf die Abdeckung des Spitzendes zu schieben oder im Glockenmuffenende einen Gleitschlauch oder eine Folienfalte über der Dichtung anzubringen, wie es ähnlich in der EP 0 343 677 beschrieben ist.

Als Hilfe beim Einbau der Dichtung und zum nachträglichen Schutz ist zwischen Dichtung und radialer Wand der Glockenmuffe ein entfernbarer Formring vorgesehen.

Zur Erzielung einer guten Abdichtung zwischen benachbarten Betonrohren ist die Formhaltigkeit der Teile wichtig. Während man die Muffe mit der eingesetzten Dichtung formhaltig fertigen kann, weil der Beton im Bereich der Muffe durch ein Formwerkzeug bis zur ausreichenden Aushärtung gehalten wird, kann es bei der Herstellung der Spitzenden zu Unrundheiten kommen, insbesondere besteht die Neigung zur ovalen Verformung beim Ausschalen des Spitzendes im Zustand der "Grünstandfestigkeit". Wenn derartige Rohre verlegt werden, kann es Schwierigkeiten mit der Abdichtung geben, insbesondere wenn man an die Dauerhaftigkeit der Abdichtung denkt. Das elastomere Material der Dichtung wird mit der Zeit weniger nachgiebig und kann sich dann den Rohrbewegungen weniger gut anpassen, insbesondere wenn das Spitzende von der idealen runden Form abweicht.

Gemäß weiterer Erfindung wird deshalb nach dem Gießen und Erhärten des jeweiligen Betonrohres wenigstens die axiale Spitzendfläche mechanisch bearbeitet und anschließend eine Beschichtung aufgebracht. Die mechanische Bearbeitung kann in einem Abtrag vorstehenden Betons bzw. von Sandkornspitzen bestehen, es ist aber auch möglich, die mechanische Bearbeitung so weit zu treiben, daß der Rohbeton bis zum Erreichen einer rundzylindrischen, axialen Fläche abgetragen wird.

Je nach der vorgesehenen Anwendung der Betonrohre besteht die Beschichtung aus Wachs, aus flüssigem, härtendem Kunststoff oder einer ringförmigen Abdeckhaube. Das Beschichtungsmaterial kann aufgesprüht und/oder aufgewalzt werden.

Bei einer Vorrichtung zum Bearbeiten des Spitzendes von gegossenen Betonrohren ist eine Schleif- oder Fräsmaschine vorgesehen, die einen Drehantrieb für Betonrohre und/oder für einen Umlaufarm aufweist. Am Arm ist ein Bearbeitungswerkzeug angebracht, das auf die gegenüberliegende und relativ zum Werkzeug sich drehende Spitzendfläche des Betonrohres einwirkt. Im Falle eines Schleif- oder Fräswerkzeuges trägt der Arm einen Rotationsantrieb für dieses mechanische Bearbeitungswerkzeug. Das Bearbeitungswerkzeug kann aber auch aus einer Auftragseinrichtung für Beschichtungsmaterial bestehen, praktisch also aus einer Sprühvorrichtung, die mit rotierenden Bürsten oder dergleichen oder mit Auftragswalzen kombiniert wird.

Wenn es sich nur darum handelt, vorstehenden Beton bzw. Sandkornspitzen abzutragen, kann der Arm zwei gegeneinander federvorgespannte Hebelarme aufweisen, wovon der eine umlaufend angetrieben und der andere Hebelarm am ersten angelenkt ist sowie an seinem Ende das mechanische Bearbeitungswerkzeug trägt.

Bei der Bearbeitung des Rohres kommt es darauf an, daß dieses zentrisch zu dem Bearbeitungswerkzeug angeordnet wird. Nachdem man störende Grate entfernt hat, kann man die Zentrierung an der Bohrung des Rohres orientieren. Zu diesem Zweck ist eine Zentriereinrichtung zum Eingriff in die Bohrung des in Bearbeitung stehenden Betonrohres vorgesehen.

Die Erfindung wird anhand der Zeichnung beschrieben.
Dabei zeigt:
- Fig. 1: einen Schnitt durch eine Seite von Spitzende und Muffe benachbarter Betonrohre nach dem Zusammenbau,
- Fig. 2: eine Form zur Herstellung eines Betonrohres, geschnitten und abgebrochen,
- Fig. 3: einen Schnitt durch ein entmanteltes Ende einer Muffe,
- Fig. 4: einen Schnitt durch eine Seite eines Spitzendes vor der Fertigstellung,
- Fig. 5: das fertig hergestellte Spitzende im Schnitt,
- Fig. 6: einen Schnitt ähnlich wie Fig. 1, jedoch mit zwischengefügtem Gleitschlauch,
- Fig. 7: eine Seitenansicht einer schematisierten Schleifmaschine, teilweise geschnitten,
- Fig. 8: eine Schnittansicht gemäß VIII-VIII in Fig. 7 einer abgewandelten Schleifmaschine,
- Fig. 9: eine weitere Ansicht einer abgewandelten Schleifmaschine,
- Fig. 10: eine schematische Schnittansicht durch die Schleifmaschine nach Fig. 9,
- Fig. 11: eine abgewandelte Einzelheit und
- Fig. 12: einen Sprüharm.

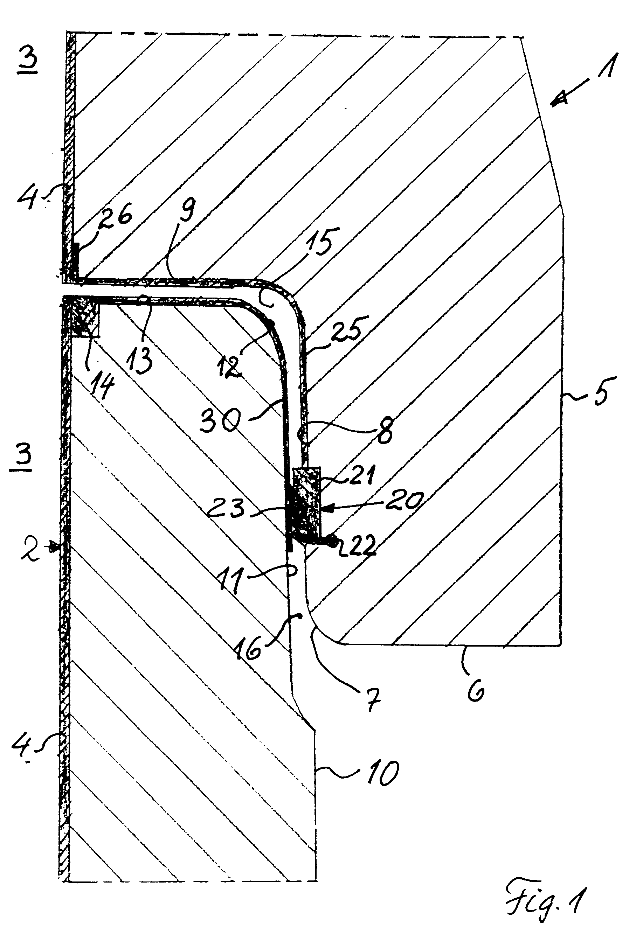

Fig. 1 zeigt die Art der Abdichtung zwischen ineinandergesteckten Betonrohren, und zwar ist vom ersten Betonrohr die eine Seite des Glockenmuffenendes 1 und von zweiten Betonrohr die eine Seite des Spitzendes 2 jeweils im Schnitt gezeigt. Links von den Schnittflächen erstrecken sich die Rohrbohrungen 3 der beiden ineinandergesteckten Betonrohre, und diese Rohrbohrungen sind durch Auskleidungen 4 gegen Korrosion durch aggressive Wässer geschützt.

Die Muffe 1 weist eine Mantelfläche 5, eine äußere radiale Ringfläche 6, eine Übergangsfläche 7, eine innere axiale Fläche 8 und eine innere radiale Fläche 9 auf. Ausgehend vom äußeren Rohrmantel 10 verjüngt sich das Spitzende 2 zu einer sich im wesentlichen axial erstreckenden Ringfläche 11, die nach einer Übergangskrümmung 12 in eine radiale Ringfläche 13 übergeht, die benachbart der Rohrbohrung zu einer Vertiefung oder Aussparung 14 führt. Zwischen der übergangsfläche 7 und der inneren axialen Fläche 8 ist eine Dichtung 20 angeordnet.

Die Dichtung 20 weist einen Fuß 21 mit Verankerungsfortsatz 22 und einen im Querschnitt trapezförmigen Bereich 23 auf, der als kombinierte Preß- und Lippendichtung wirkt. Vom Dichtungsfuß 21 geht ein Fortsatz 25 aus, der insgesamt die Gestalt eines gelochten, schalenförmigen Ringes hat und als Muffenauskleidung wirkt. Die Muffenauskleidung 25 braucht nicht aus Elastomer zu bestehen wie die Dichtung, vielmehr kann eine Verbundkonstruktion von beispielsweise PVC (Muffenauskleidung 25) und Gummi (Dichtung 20) vorliegen, wobei dann die Muffenauskleidung 25 in dem Fuß 21 der Dichtung verankert ist. Die Muffenauskleidung 25 besitzt noch eine Verbindungsstelle 26 zur Auskleidung 4 und ist mit dieser abdichtend verbunden, beispielsweise verschweißt.

Die Dichtung 20 liegt an der gegenüberliegenden Fläche des Spitzendes an, so daß der Spalt zwischen Muffe und Spitzende in einen inneren Spalt 15 und einen äußeren Spalt 16 unterteilt wird. Der innere Spalt 15 ist korrosionsfest ausgekleidet, da neben der Muffenauskleidung 25 noch eine Spitzendabdeckung 30 vorhanden ist. Diese bedeckt die axiale Ringfläche 11 des Spitzendes 2 von dem gegenüber der Dichtung 20 liegenden Bereich bis zur Aussparung 14 und ist mit der Abdeckung 4 abgedichtet verbunden.

Ineinandergesteckte, im Boden verlegte Betonrohre unterliegen häufig Setzungsbewegungen, die nicht völlig gleichmäßig erfolgen. Wenn die Achsen der Betonrohre zunächst auf einer fluchtenden Linie gelegen sind, dann gibt es häufig nach der Setzbewegung einen gewissen Knick, der beispielsweise dazu führt, daß die nicht dargestellte Seite des Spitzendes 2 sich an der Ringfläche 9 der Muffe abstützt und sich der dargestellte Wandbereich 12 des Spitzendes dem Wandbereich 8 der Muffe annähert. Deshalb kommt es bei Winkelbewegungen zwischen den beiden benachbarten Betonrohren auch zu einer Verschiebung von Teilen des Spitzendes gegenüber von Teilen der Muffe, d. h. die hier dargestellte Seite des Spitzendes rutscht ein wenig aus der Muffe heraus. Diese Schrägstellung führt dazu, daß die Dichtung 20 nicht mehr entlang einer Kreisringfläche, sondern einer elliptischen Fläche abdichten muß. Die besondere Konstruktion als Lippenpreßdichtung und das angewendete Material (Elastomer) sorgen für eine genügende federnde Nachgiebigkeit der Dichtung 20, so daß trotz sich bewegenden Spaltes 15 die Dichtwirkung erhalten bleibt. Es versteht sich außerdem, daß die Länge der Abdeckung oder Beschichtung 30 so gewählt ist, daß auch bei einem Spalt 15 von der Breite Null noch eine Überdeckung mit der Dichtung 20 aufrechterhalten bleibt.

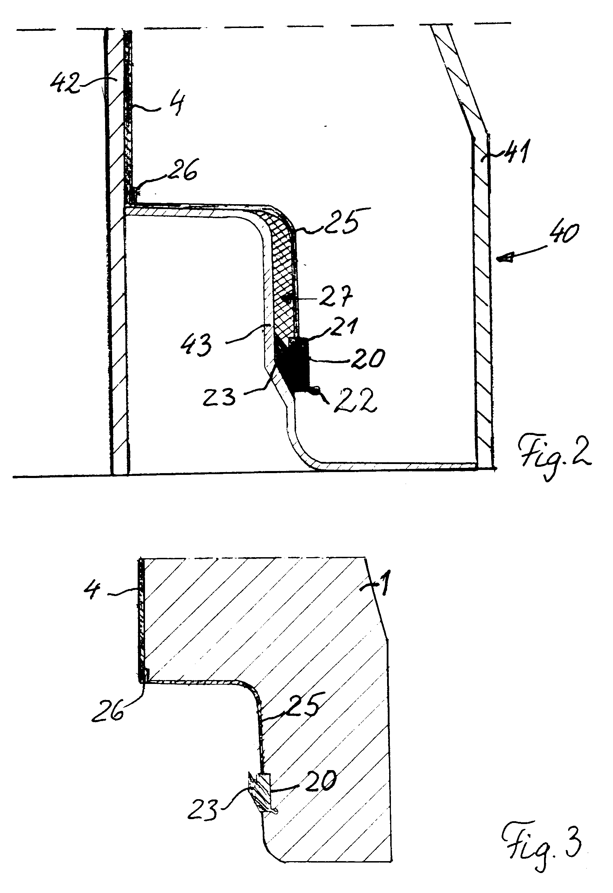

Fig. 2 zeigt das untere Ende einer Form zur Herstellung eines Betonrohres. Die Form 40 enthält einen äußeren, rohrförmigen Mantel 41, ein Kernrohr 42 und einen Muffenformkern 43. Die Schnittdarstellung beschränkt sich auf eine Ecke, man muß sich die Teile 41 und 42 wesentlich höher und als Rohrteile vorstellen, welche die Innen- und Außenoberfläche des Betonrohres begrenzen. In die Form 40 sind die Dichtung 20 und die Auskleidungen 25 und 4 eingelegt, die nach dem Gießen des Betons Bestandteile des Betonrohres werden.

Ein entfernbarer Stütz- oder Formring 27 sorgt bei der Herstellung dafür, daß die Muffenauskleidung 25 und die Dichtlippe 23 nicht unter dem Gewicht des eingefüllten Betons deformiert werden.

Fig. 3 zeigt die Glockenmuffe 1 nach Entmantelung.

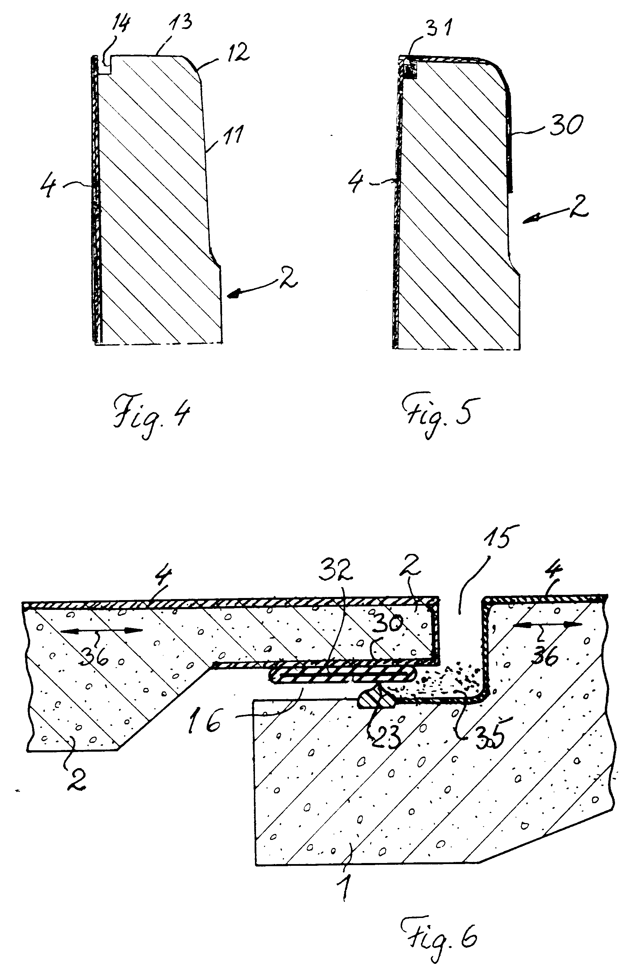

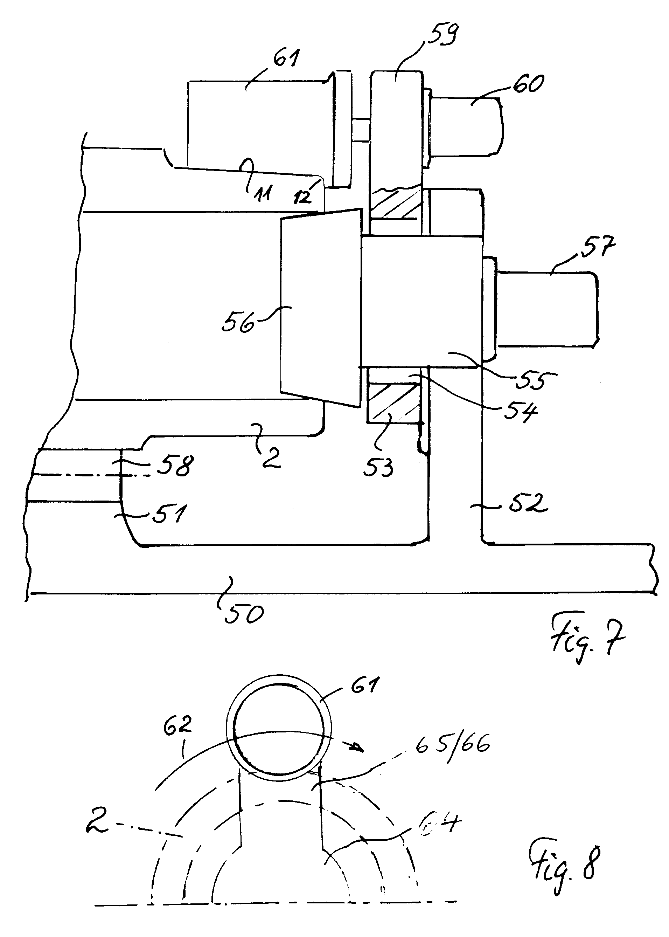

Fig. 4 zeigt das Spitzende 2 nach Herauslösen aus der Form 40 (von der in Fig. 2 der untere Eckbereich dargestellt ist). Man bemüht sich, die Flächen 11 bis 13 genau rund umlaufend zu fertigen, indem beim Entmanteln des Rohres besonders sorgfältig umgegangen wird. Auf höhere Genauigkeitsgrade kommt man, indem diese Flächen überschliffen oder rundgefräst werden, wie später anhand der Fig. 7 bis 12 erläutert wird. Dadurch ist es möglich, eine ringförmige Haube als Spitzenendabdeckung in die Vertiefung 14 und über die Flächen 11 bis 13 einzusetzen, wie in Fig. 5 dargestellt.

Es wird Bezug auf Fig. 6 genommen, die ein Stück einer Kanalsohle aus ineinandergesteckten Betonrohren zeigen soll. Nach einer gewissen Betriebszeit des Kanals kann es zu Ablagerungen 35 in dem Spalt 15 kommen, der beispielsweise auch scharfe Sandkörner enthalten kann. Wenn es in diesem Zustand zu Verschiebungen der Betonrohre gegeneinander kommt, wie durch die Pfeile 36 angedeutet, könnte - ohne Gleitschlauch 32 - der Sand zwischen Dichtlippe 23 und gegenüberliegender Spitzendabdeckung 30 gelangen und die Dichtlippe 23 beschädigen. Dies trifft auch dann zu, wenn die Dichtung 20 als Preß-Lippendichtung ausgebildet ist, wie in Fig. 1 dargestellt. Derartige Beschädigungen an der Dichtung können zu Undichtigkeiten führen.

Indem ein plattgedrückter Gleitschlauch 32 auf das Spitzende 2 gezogen ist, wird dieses Problem gelöst. Der Gleitschlauch 32 weist gut aneinander gleitende Innenflächen auf, sei es, daß ein passendes Material verwendet wird, sei es, daß etwas Gleitmittel im Schlauch eingefüllt ist. Es kommt so zu keiner Relativverschiebung zwischen der Dichtlippe 23 und dem Gleitschlauch 32, vielmehr wird die Relativverschiebung zwischen den beiden beteiligten Betonrohren ganz durch die Verschiebung der aufeinanderliegenden Schlauchwände gegeneinander aufgefangen.

Fig. 7 bis 12 zeigen nicht zur Erfindung gehörende Vorrichtungen zur Bearbeitung des Spitzendes 2 von Betonrohren. Das Maschinengestell 50 weist einen Werkstücktisch 51 und einen Ständer 52 auf. Am Ständer ist ein Schlitten 53 zur Einstellung von Achsabständen verstellbar und feststellbar geführt. Der Schlitten 53 weist ein Langloch 54 auf, durch das ein Drehzapfen 55 hindurchreicht, der am Ende einen Zentrierkonus 56 trägt. Der Drehzapfen 55 kann von einem Zentralantrieb 57 angetrieben werden. Am Werkstücktisch 51 sind V-förmig zueinander angeordnete Rollen 58 vorgesehen, auf denen das zu bearbeitende Betonrohr so aufgelegt wird, daß das Spitzende 2 am Zentrierkonus 56 angekoppelt wird. Auf diese Weise kann mit dem Zentral antrieb 57 das in Bearbeitung stehende Betonrohr gedreht werden. Am Schlitten 53 ist ein Arm 59 angebracht, der einen Schleifscheibenantrieb 60 für eine Formschleifscheibe 61 trägt. Damit kann die für die Dichtwirkung bedeutsame Fläche 11 und die Übergangsabrundung 12 des Spitzendes bearbeitet werden.

Der Zentralantrieb 57 kann auch durch einen Antrieb über die Rollen 58 ersetzt werden. In einem solchen Fall ist der Zentrierkonus 56 drehbar zu dem Zapfen 55 gelagert.

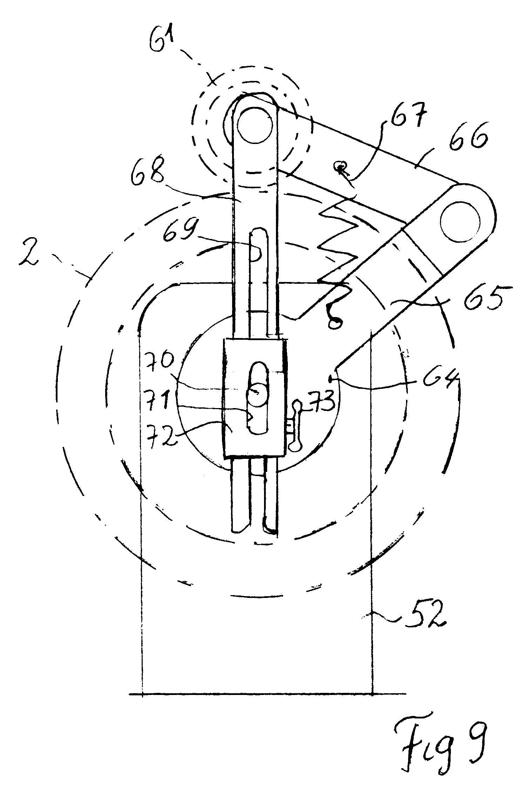

Fig. 8 und 9 zeigen eine weitere Abwandlung der Bearbeitungsvorrichtung nach Fig. 7. Anstelle des Drehantriebs des Betonrohres kann auch das Werkzeug 61 (Formschleifscheibe, Formfräser) entlang einer Kreisbahn 62 um das Spitzende 2 des Betonrohres herum angetrieben werden. Zu diesem Zweck ist eine Nabe 64 am Ständer 52 drehbar gelagert und trägt einen Gelenkarm aus Teilen 65 und 66, die mittels einer Feder 67 gegeneinander vorgespannt sind.

Diese Konstruktion kann im übrigen auch für den Arm 59 in Fig. 7 verwendet werden, um das Werkzeug 61 federnd an die Oberfläche des Betonrohres anzulegen, wenn es sich darum handelt, vorstehende Spitzen und Rauhigkeiten der Betonoberflächen zu beseitigen.

Die Beweglichkeit der Hebelarme 65 und 66 kann durch eine Koppelschwinge 68 begrenzt werden. Zu diesem Zweck weist die Koppelschwinge 68 einen Führungsschlitz 69 für einen am Hebelarm 65 befestigten Stift 70 auf, der innerhalb eines Langlochs 71 gleiten kann. Das Langloch 71 gehört einem Feststellschieber 72 an, der längs der Koppelstange 68 verschoben und mittels einer Klemmschraube 73 festgestellt werden kann. Mittels des Feststellschiebers 72 läßt sich der Radius genau einstellen, bis auf welchen das Betonrohr 2 außen abgeschliffen werden kann.

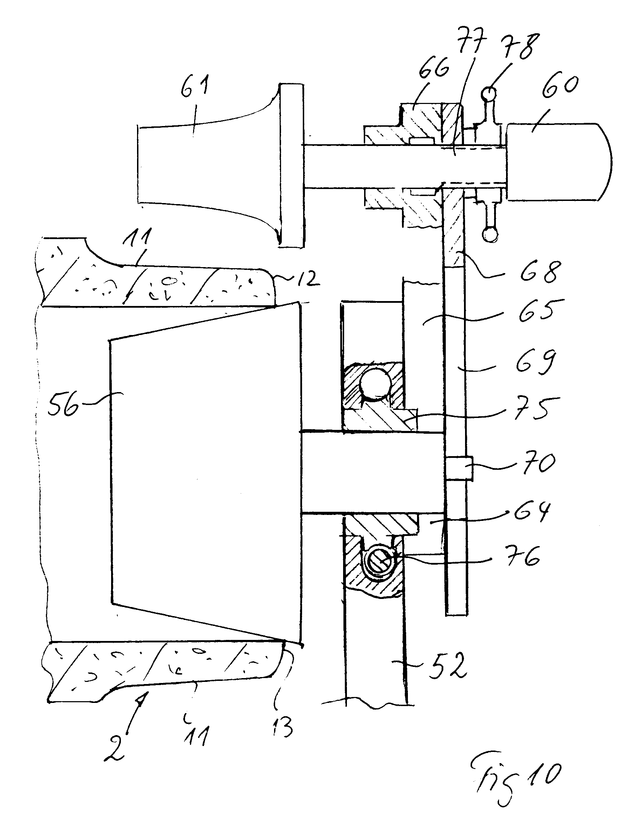

Fig. 10 zeigt skizzenmäßig, wie der Antrieb der Bearbeitungsmaschine nach Fig. 9 gestaltet sein kann. Zum Rundlaufantrieb des Hebelarms 65 kann ein Schneckengetriebe mit einem Schneckenrad 75 und einer Schneckenwelle 76 benutzt werden, die im Ständer 52 gelagert sind. Das Schneckenrad 75 ist mit der Nabe 64 verbunden. Der die Schneckenwelle 76 antreibende Motor ist nicht dargestellt. Das Schneckengetriebe ermöglicht eine starke Untersetzung der Motorantriebszahl, wie es erwünscht ist.

Um das Werkzeug 61 an das Spitzende 2 richtig stellen zu können, ist ein Spindelantrieb, enthaltend eine Hohlspindel 77 und ein Handrad 78, vorgesehen. Damit kann die Schleifscheibe 61 in axialer Richtung verstellt werden. Die radiale Verstellung erfolgt, wie im Zusammenhang mit Fig. 9 beschrieben, über die Teile 65 bis 68. Der Motor 60 treibt das Werkzeug 61 über eine nicht dargestellte, im Inneren der Hohlspindel 77 laufende Welle an.

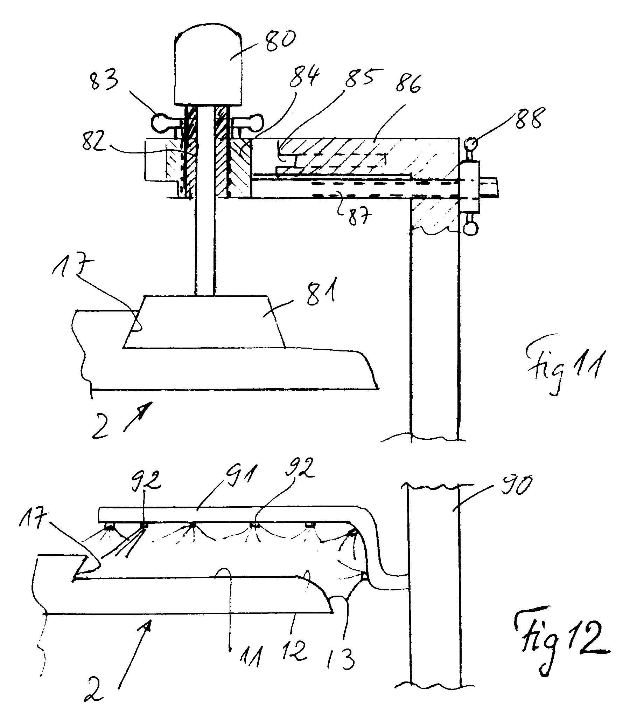

Mitunter ist es erwünscht, am Spitzende 2 eine hinterschnittene Schulter 17 (Fig. 11 und 12) vorzusehen, die einen sicheren Halt für eine aufgebrachte Dichtung bietet, wenn das Spitzende in das Glockenmuffenende eingeschoben wird. Fig. 11 zeigt, wie man eine solche hinterschnittene Schulter 17 durch Beschleifen einer vorgeformten Schulter herstellen kann. Zu diesem Zweck treibt ein Motor 80 eine kegelstumpfförmige Fräs- oder Schleifscheibe 81 an, die radial und axial an das Werkstück 2 angestellt werden kann. Die Verstelleinrichtungen sind schematisch dargestellt und enthalten jeweils eine Spindel 82 bzw. 87, ein Verstellrad 83 bzw. 88 und einen Führungsblock 84, der die Hohlspindel 82 aufnimmt und mit Längsführungen 85 zusammenarbeitet, die in einem Maschinenarm 86 vorgesehen sind. Die Spindel 87 ist mit dem Führungsblock 84 verbunden und treibt diesen längs der Führung 85 an, wenn das Handrad 88 gedreht wird. In ähnlicher Weise läßt sich durch Drehen des Handrades 83 die Spindel 82 in radialer Richtung verstellen und damit auch das Werkzeug 81. Nicht dargestellte Antriebseinrichtungen dienen dazu, das Werkstück 2 und den Arm 86 relativ zueinander zu drehen, wobei man sich der Prinzipien bedienen kann, wie mit Bezug auf Fig. 7 bis 10 beschrieben.

Fig. 12 zeigt den umlaufenden Arm 90 einer Wachs- oder Kunststoffauftragmaschine, an welchem ein gekrümmtes Rohr 91 mit Düsenöffnungen 92 angebracht ist. Der Drehantrieb des Arms 90 kann ähnlich gestaltet sein, wie im Zusammenhang mit Fig. 10 beschrieben. In der Tat kann sogar der gleiche Antrieb verwendet werden, d.h. der Arm 90 ist an der gleichen Nabe 64 befestigt wie der Arm 65. Bei einer derartigen Anordnung kann man im übrigen als Werkzeug 61 eine antriebslos mitlaufende oder langsam angetriebene Glättwalze verwenden, um das aufgetragene Wachs bzw. den Kunststoff zu glätten und eine runde Oberfläche 11 des Spitzendes zu erzielen. Auch rotierende Bürsten sind als Werkzeug 61 geeignet.

Der Zentrierkonus 56 kann auch als Spannkonus ausgebildet sein, der nicht am äußersten Ende der Rohrbohrung angreift, sondern das Betonrohr etwas weiter innen erfaßt, so daß die Fläche 13 und die Aussparung 14 des Spitzendes 2 für eine Bearbeitung frei zugänglich sind.

Die mit Fig. 7 bis 12 dargestellten Bearbeitungsmaschinen können auch für Rohre ohne Auskleidung verwendet werden, wenn es sich nur darum handelt, hervorstehende Sandkörner zu entfernen, die sonst durch aufgetragenes Gleitmittel nicht ausreichend abgedeckt wären. In diesem Fall wird die Schleifmaschine im Arbeitstakt der Überprüfung und Entgratung der Spitzenden der Betonrohre eingesetzt. In der Praxis wird man die Schleif- oder Frässcheibe hinsichtlich der Breite und Form den Flächen 11 und 12 des Spitzendes anpassen und einige wenige Umdrehungen umlaufen lassen.

Auch wenn keine komplette Auskleidung der Betonrohre gewählt wird, ist der Auftrag von Wachs, flüssigem Kunststoff oder dergleichen auf dem Spitzende vorteilhaft, um eventuelle Lunkerstellen auszufüllen und so eine Wasserdurchlässigkeit unterhalb der Dichtlippe zu verhindern. Ferner wird durch die geeignete Auswahl des aufgesprühten Materials die Reibung beim Ineinanderschieben von Spitzende und Glockenmuffenende der Betonrohre verringert. Dadurch kann auf jeden Fall an hochwertigem Gleitmittel gespart werden, es ist sogar denkbar, daß man ohne Gleitmittel auskommt.

Der Auftrag auf dem Spitzende kann aber auch so dick sein, daß man eine Bedeckung im Sinne einer Beschichtung oder Auskleidung erhält, die zusammen mit der Rohrbohrungsauskleidung (Inliner-Rohr) und der beschriebenen Glockenmuffenauskleidung einen kompletten Korrosionsschutz für die Betonrohre ergibt.

## Patentansprüche

1. Korrosionsgeschütztes Betonrohr zum Ineinanderstecken von gleichartigen Betonrohren mit folgenden Merkmalen: jedes Betonrohr weist auf:
a) eine Rohrbohrung (3) mit einer diese bedeckenden Auskleidung (4),
b) ein Glockenmuffenende (1) mit
b.1) einer inneren, radialen, ausgekleideten Fläche (9),
b.2) einer inneren, axialen, ausgekleideten Fläche (8) und
b.3) einer äußeren, radialen Fläche (6),
c) ein Spitzende (2)
c.1) mit einer radialen, ausgekleideten Fläche (13) und
c.2) einer axialen, teilweise ausgekleideten Fläche (11), wobei die Auskleidung (30) des Spitzendes (2) die radiale Fläche (13) und die axiale Fläche (11) bis zur vollständigen Überdeckung mit einer Dichtung (20) abdeckt, und
c.3) eine Verbindungsstelle (14) am Übergang zwischen Rohrbohrungs-Auskleidung (4) und radialer Fläche (13) vorgesehen ist,
d) eine zwischen Spitzende und Glockenmuffenende von ineinandergesteckten Betonrohren wirksame Dichtung (20);
dadurch gekennzeichnet, daß
d.1) die Dichtung (20) in die innere axiale Fläche (8) des Glockenmuffenendes (1) bei der Herstellung der Betonwandung mit eingegossen ist, und daß
d.2) die Dichtung (20) einen ringförmigen Fortsatz (25) aufweist, der als Muffenauskleidung (25) der inneren radialen und der angrenzenden inneren axialen Fläche (8, 9) wirksam ist, bis zur Rohrbohrungsauskleidung (4) reicht und mit dieser abgedichtet verbunden (26) ist.

2. Betonrohr nach Anspruch 1,
dadurch gekennzeichnet, daß die Spitzendauskleidung (30) aus einer Beschichtung der radialen und der axialen Fläche (11, 13) des Spitzendes (2) besteht.

3. Betonrohr nach Anspruch 1 oder 2,
dadurch gekennzeichnet, daß ein Gleitschlauch (32) oder eine Folienfalte über der Abdeckung (30) des Spitzendes oder über der Dichtung (20) angebracht ist.

4. Betonrohr nach einem der vorhergehenden Ansprüche 1 bis 3, dadurch gekennzeichnet, daß an der Glockenmuffe (1) ein entfernbarer Ring (27) vorgesehen ist.

5. Verfahren zur Herstellung des korrosionsgeschützten Betonrohres nach einem der Ansprüche 1 bis 4
mit folgenden Schritten:
in eine Betongießform (40) werden die Auskleidungen (4, 25) und die Dichtung (20) eingelegt;
die Betongießform (40) wird mit flüssigem Beton gefüllt und erhärten lassen;
nach Erreichen der Grünstandfestigkeit wird das Betonrohr entschalt;
wenigstens die axiale Spitzendfläche (11) des jeweiligen Betonrohres wird mechanisch bearbeitet und anschließend wird die Auskleidung (30) nach den Merkmalen c.1) und c.2) aufgebracht und mit der Rohrbohrungsauskleidung (4) verbunden.

6. Verfahren nach Anspruch 5,
dadurch gekennzeichnet, daß die Auskleidung (30) aus einer Beschichtung mit Wachs besteht.

7. Verfahren nach Anspruch 5,
dadurch gekennzeichnet, daß die Auskleidung (30) aus einer Beschichtung mit flüssig aufgetragenem, härtendem Kunststoff besteht.

8. Verfahren nach einem der Ansprüche 5 bis 7,
dadurch gekennzeichnet, daß das Aufbringen des Beschichtungsmaterials im Aufsprühen und/oder Aufwalzen besteht.

9. Verfahren nach einem der Ansprüche 5 bis 8,
dadurch gekennzeichnet, daß die mechanische Bearbeitung zur Herstellung des Spitzendes von gegossenen Betonrohren in einem Antrag lediglich vorstehenden Betons bzw. von Sandkornspitzen besteht ("Überschleifen").

10. Verfahren nach einem der Ansprüche 5 bis 8,
dadurch gekennzeichnet, daß zur Herstellung des Spitzendes (2) von gegossenen Betonrohren vor dem Aufbringen der Auskleidung (30) am Außenumfang (11) des Spitzendes (2) eine hinterschnittene Schulter (17) durch mechanische Bearbeitung erzeugt wird.

## Claims

1. A concrete pipe, protected from corrosion, for inserting similar concrete pipes in one another and having the following features:
each concrete pipe has:
a) a pipe bore (3) covered by a lining (4),
b) a socket end (1) with
b.1) an inner radial lined surface (9),
b.2) an inner axial lined surface (8), and
b.3) an outer radial surface (6),
c) a spigot end (2)
c.1) with a radial lined surface (13) and
c.2) an axial, partly lined surface (11), the lining (13) on the spigot end (2) covering the radial surface (13) and the axial surface (11) until completely overlapped by a seal (20), and
c.3) a connecting place (14) is provided at the transition between the pipe-bore lining (4) and the radial surface (13), and
d) a seal (20) operative between the spigot end and the socket end of concrete pipes inserted into one another,
characterised in that
d.1) the seal (20) is cast in the inner axial surface (8) of the socket end (1) during manufacture of the concrete wall and
d.2) the seal (20) has an annular continuation (25) which operates as a socket lining (25) on the inner radial and the adjacent inner axial surface (8, 9), extends up to the pipe-bore lining (4) and is sealingly connected thereto (26).

2. A concrete pipe according to claim 1,
characterised in that the narrow-end lining (30) comprises a coating on the radial and the axial surface (11, 13) of the spigot end (2).

3. A concrete pipe according to claim 1 or 2,
characterised in that a sliding flexible tube (32) or a folded foil is placed over the cover (30) on the spigot end or over the seal (20).

4. A concrete pipe according to any of the preceding claims 1 to 3, characterised in that a removable ring (27) is provided on the socket (1).

5. A method of manufacturing a concrete tube protected from corrosion according to any of claims 1 to 4 and with the following steps: the linings (4, 25) and the seal (20) are placed in a concrete-casting mould (40);
the mould (40) is filled with liquid concrete and left to harden;
after the green strength has been reached, the concrete pipe is removed from the mould;
each concrete pipe, or at least the axial spigot end surface (11) thereof, is mechanically processed, after which the lining (30) is applied in accordance with featured c.1) and c.2) and connected to the pipe-bore lining (4).

6. A method according to claim 5, characterised in that the lining (30) comprises a wax coating.

7. A method according to claim 5, characterised in that the lining (30) comprises a coating of a plastic which is applied in the liquid state and hardens.

8. A method according to any of claims 5 to 7, characterised in that the coating material is applied by spraying and/or by rolling.

9. A method according to any of claims 5 to 8, characterised in that the mechanical processing for producing the spigot end of cast concrete pipes consists simply in removal of projecting concrete or of the corners of sand grains ("surface grinding").

10. A method according to any of claims 5 to 8, characterised in that in order to manufacture the spigot end (2) of cast concrete pipes, an undercut shoulder (17) is produced by mechanical machining before the lining (30) is applied to the outer periphery (11) of the spigot end (2).

## Revendications

1. Tuyau à béton protégé contre la corrosion, destiné à permettre l'emboîtement successif de tuyaux à béton de même type et présentant les caractéristiques ci-après : chaque tuyau à béton présente :
a) un alésage tubulaire (3) avec un revêtement (4) recouvrant cet alésage,
b) une extrémité de manchon en cloche (1), avec
b.1) une surface revêtue (9) radiale intérieure,
b.2) une surface revêtue (8) axiale intérieure et
b.3) une surface radiale extérieure (6),
c) une extrémité effilée (2)
c.1) avec une surface revêtue (13) radiale et,
c.2) une surface partiellement revêtue (11) axiale, le revêtement (30) de l'extrémité effilée (2) recouvrant la surface radiale (13) et la surface axiale (11), jusqu'à ce que le recouvrement soit complet, avec un joint d'étanchéité (20), et
c.3) un point de liaison (14) à la transition entre le revêtement d'alésage tubulaire (4) et la surface radiale (13) étant prévu,
d) un joint d'étanchéité (20) agissant entre extrémité de pointe (14) et extrémité de manchon en cloche de tuyaux à béton enfilés les uns dans les autres; et
caractérisé en ce que
d.1) le joint d'étanchéité (20) est coulé avec la paroi en béton lors de la fabrication de celui-ci, dans la surface axiale intérieure (8) de l'extrémité de manchon en cloche (1), et
d.2) le joint d'étanchéité (20) présente un prolongement annulaire (25) réalisé sous forme de revêtement de manchon (25) de la surface radiale intérieure et de la surface axiale intérieure (8, 9) limitrophe, arrivant jusqu'au revêtement d'alésage tubulaire (4) et relié, de façon étanche (en 26) à celui-ci.

2. Tuyau à béton selon la revendication 1, caractérisé en ce que le revêtement d'extrémité effilée (30) est composé d'un revêtement de la surface radiale et de la surface axiale (11, 13) de l'extrémité effilée (2).

3. Tuyau à béton selon la revendication 1 ou 2, caractérisé en ce qu'un manchon coulissant (32) ou un pliage de feuille est monté sur le recouvrement (30) de l'extrémité effilée ou sur le joint d'étanchéité (20).

4. Tuyau à béton selon l'une des revendications 1 à 3 précédentes, caractérisé en ce qu'un anneau (27) amovible est prévu sur le manchon en cloche (1).

5. Procédé de fabrication du tuyau à béton protégé en corrosion selon l'une des revendications 1 à 4, avec les étapes ci-après :
les revêtements (4, 25) et le joint d'étanchéité (20) sont insérés dans un moule de coulée de béton (40);
le moule de coulée de béton (40) est rempli de béton liquide que l'on laisse durcir;
après atteinte de la résistance à cru, le tuyau à béton est démoulé;
au moins la surface d'extrémité de pointe axiale (11) du tuyau à béton respectif est usinée mécaniquement, puis est appliqué le revêtement (30) selon les caractéristiques c.1) et c.2) et relié au revêtement d'alésage (4).

6. Procédé selon la revendication 5, caractérisé en ce que le revêtement (30) est constitué d'un revêtement à base de cire.

7. Procédé selon la revendication 5, caractérisé en ce que le revêtement (30) est constitué d'un revêtement d'une matière synthétique appliquée à l'état liquide et susceptible de durcir.

8. Procédé selon l'une des revendications 5 à 7, caractérisé en ce que l'application du matériau de revêtement s'effectue par pulvérisation et/ou au rouleau.

9. Procédé selon l'une des revendications 5 à 8, caractérisé en ce que l'usinage mécanique de fabrication d'extrémité effilée de tuyaux à béton moulés comporte un enlèvement des seules parties saillantes du béton ou des pointes de grain de sable ("meulage de surface").

10. Procédé selon l'une des revendications 5 à 8, caractérisé en ce qu'un épaulement (17) en contre-dépouille est produit par usinage mécanique des tuyaux à béton moulés pour constituer l'extrémité effilée (2) , avant application du revêtement (30) sur la périphérie extérieure (11) de l'extrémité effilée (2).
